(19) Europäisches Patentamt / European Patent Office / Office européen des brevets

(11) **EP 4 206 240 A1**

(12) # EUROPEAN PATENT APPLICATION

(43) Date of publication:
**05.07.2023 Bulletin 2023/27**

(21) Application number: **22212605.4**

(22) Date of filing: **09.12.2022**

(51) International Patent Classification (IPC):
**C08F 210/16** (2006.01)    **C08J 5/18** (2006.01)
**B32B 27/32** (2006.01)

(52) Cooperative Patent Classification (CPC):
(C-Sets available)
**C08F 210/16; C08J 5/18; C08L 23/0815;**
B32B 27/32; C08J 2323/08      (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2022 KR 20220000945
29.09.2022 KR 20220124247**

(71) Applicant: **Hanwha TotalEnergies Petrochemical
Co., Ltd.
Seosan-si, Chungcheongnam-do 31900 (KR)**

(72) Inventors:
• **JANG, Hee Jung**
  **31900 Seosan-si (KR)**
• **HAN, Jae Hyuck**
  **31900 Seosan-si (KR)**
• **PARK, Ji Yong**
  **31900 Seosan-si (KR)**
• **SONG, Jong Kun**
  **31900 Seosan-si (KR)**

(74) Representative: **Long, Giorgio et al
Jacobacci & Partners S.p.A.
Via Senato, 8
20121 Milano (IT)**

(54) **POLYETHYLENE RESIN COMPOSITION, METHOD FOR MANUFACTURING SAME AND MOLDED ARTICLE INCLUDING SAME**

(57) Provided is a polyethylene resin composition, a method for manufacturing the same, and a molded article including the same, wherein polyethylene resin composition includes a polyethylene resin formed using a first reactor and a second reactor successively, wherein the zero shear viscosity ($\eta 0_{1st}$) by an ARES rheometer at 180°C of a polyethylene resin formed in the first reactor is $10^6$ poise to $10^8$ poise, and the number of short chain branches ($SCB_{1st}$) per 1000 carbons by $^{13}$C-NMR is 5.0 to 20, and the ratio of zero shear viscosity ($\eta 0_{1st}/\eta 0_{2nd}$) by an ARES rheometer at 180°C of the polyethylene resin formed in the first reactor and a polyethylene resin formed in the second reactor is 10 to 100, the ratio ($SCB_{1st} / SCB_{2nd}$) of the number of short chain branches per 1000 carbons by $^{13}$C-NMR is 2 to 20, and the density difference ($D_{2nd} - D_{1st}$) is 0.01 g/cm$^3$ to 0.05 g/cm$^3$.

EP 4 206 240 A1

(52) Cooperative Patent Classification (CPC): (Cont.)

C-Sets
**C08F 210/16, C08F 2/001;**
**C08F 210/16, C08F 4/652;**
**C08L 23/0815, C08L 23/0815;**
C08F 210/16, C08F 210/14, C08F 2500/10,
C08F 2500/17, C08F 2500/12, C08F 2500/34,
C08F 2500/33, C08F 2500/26;
C08F 210/16, C08F 210/14, C08F 2500/10,
C08F 2500/17, C08F 2500/12, C08F 2500/34,
C08F 2500/33, C08F 2500/26, C08F 2500/07

**Description**

BACKGROUND

1. Field

Embodiments relate to a polyethylene resin composition, a method for manufacturing the same, and a molded article including the same.

2. Description of the Related Art

In recent years, with stricter regulations on recycling around the world, and changes in a company's own social responsibility for sustainability and awareness of addressing a wide range of environmental issues, flexible packaging materials are required to be designed to be suitable for collection, classification, and recycling. As the most effective way to address the above issue, by using a single material as a packaging material which has been previously used in combination with various materials, particularly, by applying a packaging material to which a polyethylene (PE) or polypropylene (PP) single material is applied, it is possible to recycle easily, and to contribute to improving the quality of recycled products.

However, there is a problem with applying a polyethylene film typically manufactured by a blowing or casting process to a single material and simply replacing a base film such as an existing polyethylene terephthalate (PET) film or polyamide (PA) film in that the mechanical physical properties of the polyethylene film are somewhat degraded. To this end, it is required to apply a biaxially oriented polyethylene (BOPE) film. In a process of manufacturing the biaxially oriented polyethylene (BOPE) film, when the film is stretched in a longitudinal direction and a traverse direction, the polyethylene chain and crystal structure are highly oriented, so that better mechanical strength is achieved, the impact strength in particular is improved, and optical properties such as transparency and film appearance are remarkably improved.

A method for manufacturing a biaxially stretched film includes a tenter frame process and a tubular stretching method. The tenter frame process has been used to process universal biaxially stretched films such as polypropylene (PP), polyethylene terephthalate, and polyamide. When compared with the tubular stretching method, the tenter frame process has the advantages of higher elongation, faster molding speed, and higher production efficiency, and in addition, a biaxially stretched film manufactured thereby has good thickness uniformity and excellent mechanical physical properties and optical properties.

However, in the case of the tenter frame process, film processing is greatly affected by the molecular structure of a raw material, and the stretching process conditions are very demanding. Particularly, typical polyethylene has a fast crystallization rate and high crystallinity, and thus, has a narrow stretchable temperature range and a very low elongation, and when wrinkles are formed or thickness is not even during stretching, a film is eventually torn when stretched. Therefore, there is a demand for the development of a raw material for a polyethylene resin composition suitable for a tenter frame process for manufacturing a BOPE film having a high elongation.

SUMMARY

An aspect of the present invention provides a polyethylene resin composition which is capable of being successively biaxially stretched up to 6 times in a longitudinal direction (MD) and 10 times in a transverse direction (TD) using a tenter frame process, has excellent processability during stretching, and has a wide stretchable temperature range.

Another aspect of the present invention provides a method for manufacturing the polyethylene resin composition.

Another aspect of the present invention provides a molded article including the polyethylene resin composition.

According to at least one of embodiments, a polyethylene resin composition includes a polyethylene resin formed using a first reactor and a second reactor successively, wherein the zero shear viscosity ($\eta 0_{1st}$) by an ARES rheometer at 180°C of a polyethylene resin formed in the first reactor is $10^6$ poise to $10^8$ poise, and the number of short chain branches ($SCB_{1st}$) per 1000 carbons by $^{13}$C-NMR is 5.0 to 20, and the ratio of zero shear viscosity ($\eta 0_{1st}/\eta 0_{2nd}$) by an ARES rheometer at 180°C of the polyethylene resin formed in the first reactor and a polyethylene resin formed in the second reactor is 10 to 100, the ratio ($SCB_{1st} / SCB_{2nd}$) of the number of short chain branches per 1000 carbons by $^{13}$C-NMR is 2 to 20, and the density difference ($D_{2nd} - D_{1st}$) is 0.01 g/cm$^3$ to 0.05 g/cm$^3$.

The density ($D_{1st}$) of the polyethylene resin formed in the first reactor may be 0.915 g/cm$^3$ to 0.935 g/cm$^3$, and the density ($D_{2nd}$ of the polyethylene resin formed in the second reactor is 0.945 g/cm$^3$ to 0.965 g/cm$^3$.

When forming the polyethylene resin in the first reactor, a comonomer may be supplied at a g/kg supply ratio of 10 to 150 relative to C$_2$.

When forming the polyethylene resin in the first reactor, $H_2$ may be supplied at a mg/kg supply ratio of 10 to 100 relative to $C_2$.

The melting temperature (Tm) of the polyethylene resin formed in the first reactor may be 110°C to 126°C, and the difference (Tm-Tc) between the melting temperature (Tm) and the crystallization temperature (Tc) may be 10°C to 15°C.

When forming the polyethylene resin in the second reactor, $H_2$ may be supplied at a mol%/wt% supply ratio of 0.4 to 0.7 relative to $C_2$.

The zero shear viscosity ($\eta0_{2nd}$) by an ARES rheometer at 180°C of the polyethylene resin formed in the second reactor may be $9.0 \times 10^4$ poise to $7.0 \times 10^5$ poise.

The number of short chain branches ($SCB_{2nd}$) per 1000 carbons by $^{13}C$-NMR of the polyethylene resin formed in the second reactor may be 1.0 to 5.0.

The weight ratio of the polyethylene resin formed in the first reactor and the polyethylene resin formed in the second reactor may be 45 to 55 : 55 to 45.

The density of the polyethylene resin composition may be 0.945 g/cm$^3$ to 0.970 g/cm$^3$.

The melt index of the polyethylene resin composition may be 0.4 g/10 min to 3.0 g/10 min under a 2.16 kg load condition at 190°C, and may be 2.0 g/10 min to 10 g/10 min at a 5 kg load condition at 190°C.

According to another embodiment, a method for manufacturing a polyethylene resin composition includes preparing a polyethylene resin using a first reactor and a second reactor successively, wherein the zero shear viscosity ($\eta0_{1st}$) by an ARES rheometer at 180°C of a polyethylene resin formed in the first reactor is $10^6$ poise to $10^8$ poise, and the number of short chain branches ($SCB_{1st}$) per 1000 carbons by $^{13}C$-NMR is 5.0 to 20, and the ratio of zero shear viscosity ($\eta0_{1st}/\eta0_{2nd}$) by an ARES rheometer at 180°C of the polyethylene resin formed in the first reactor and a polyethylene resin formed in the second reactor is 10 to 100, the ratio ($SCB_{1st} / SCB_{2nd}$) of the number of short chain branches per 1000 carbons by $^{13}C$-NMR is 2 to 20, and the density difference ($D_{2nd} - D_{1st}$) is 0.01 g/cm$^3$ to 0.05 g/cm$^3$.

According to another embodiment, a molded article includes the polyethylene resin composition.

The molded article may be a film successively biaxially stretched to a longitudinal direction (MD) elongation of 4 to 6 times and a transverse direction (TD) elongation of 8 to 10 times by a tenter-frame process.

ADVANTAGEOUS EFFECTS

A polyethylene resin composition according to an embodiment of the present invention is capable of being successively biaxially stretched with an elongation in a longitudinal direction (MD) of up to 6 times and an elongation in a transverse direction (TD) of up to 10 times by a tenter frame process, has excellent processability during stretching, and has a wide stretchable temperature range, thereby having excellent stretch properties. Accordingly, a final film with improved transparency and high mechanical strength may be ensured.

DETAILED DESCRIPTION

Hereinafter, embodiments will be described in detail to be easily carried out by those skilled in the art. However, the embodiments may be embodied in many different forms and the present invention is not limited to the embodiments described herein.

A polyethylene resin composition according to an embodiment of the present invention includes a polyethylene resin. The polyethylene resin may be formed by polymerization using a two-stage reactor composed of a first reactor and a second reactor which are connected to each other. Specifically, a polyethylene resin is primarily formed by polymerization in the first reactor, and the polyethylene resin obtained at this time is transported to the second reactor and polymerized therein to obtain a polyethylene resin secondarily. The first reactor and the second reactor may be slurry processes.

The polyethylene resin formed in the first reactor may be a low-density polyethylene resin having a density lower than that of the polyethylene resin formed in the second reactor, and the polyethylene resin formed in the second reactor may be a high-density polyethylene resin having a density higher than that of the polyethylene resin formed in the first reactor.

Specifically, the density ($D_{1st}$) of the polyethylene resin formed in the first reactor may be 0.915 g/cm$^3$ to 0.935 g/cm$^3$, and may be, for example, 0.920 g/cm$^3$ to 0.935 g/cm$^3$. When the density of the polyethylene resin formed in the first reactor is within the above range, a final film may be stably successively biaxially stretched in a longitudinal direction and a transverse direction, and the stretch ratio may be improved.

In addition, the density ($D_{2nd}$) of the polyethylene resin formed in the second reactor may be 0.945 g/cm$^3$ to 0.935 g/cm$^3$, and may be, for example, 0.945 g/cm$^3$ to 0.935 g/cm$^3$. When the density of the polyethylene resin formed in the second reactor is within the above range, the modulus of a stretched film is excellent, and the thermal stability is improved.

The zero shear viscosity ($\eta0_{1st}$) by an ARES rheometer at 180°C of the polyethylene resin formed in the first reactor may be $10^6$ poise to $10^8$ poise, and may be, for example, $10^6$ poise to $10^7$ poise. When the polyethylene resin formed in the first reactor has a zero shear viscosity within the above range, the mechanical strength of a finally formed polyethylene resin may be improved.

The number of short chain branches ($SCB_{1st}$) per 1000 carbons by $^{13}$C-NMR of the polyethylene resin formed in the first reactor may be 5 to 20, and may be, for example, 5 to 15. When the polyethylene resin formed in the first reactor has the number of short chain branches within the above range, in a process of successively biaxially stretching the final film using a tenter frame process, the elongation in the longitudinal direction and the transverse direction may be increased, and the final film with high mechanical strength may be obtained.

When forming the polyethylene resin in the first reactor, a comonomer may be supplied and polymerized theretogether. The comonomer may be 1-butene, 1-hexene, 1-octene, or the like, but is not limited thereto. The comonomer may be supplied to the first reactor at a g/kg supply ratio of 10 to 150 relative to $C_2$, and may be supplied, for example, at a g/kg supply ratio of 30 to 100. When the comonomer is supplied to the first reactor at a supply ratio within the above range, there is no risk of reactor plugging and fouling forming, and in a process of biaxially stretching the final film, the elongation in the longitudinal direction and the transverse direction may be increased, and the final film with high mechanical strength may be obtained.

In addition, when forming the polyethylene resin in the first reactor, $H_2$ may be supplied and polymerized theretogether. The $H_2$ may be supplied to the first reactor at a mg/kg supply ratio of 10 to 100 relative to $C_2$, and may be supplied, for example, at a mg/kg supply ratio of 20 to 60. When the $H_2$ is supplied to the first reactor at a supply ratio within the above range, there is no risk of reactor plugging and fouling forming, and in the process of biaxially stretching the final film, the elongation in the longitudinal direction and the transverse direction may be increased, and the final film with high mechanical strength may be obtained.

The melting temperature (Tm) of the polyethylene resin formed in the first reactor may be 110°C to 126°C, and may be, for example, 120°C to 126°C. When melting temperature of the polyethylene resin formed in the first reactor is within the above range, in the process of biaxially stretching the final film, the stretch properties may be improved.

In addition, the difference (Tm-Tc) between the melting temperature (Tm) of the polyethylene resin formed in the first reactor and the crystallization temperature (Tc) may be 10°C to 15°C, and may be, for example, 10°C to 12°C. When the difference between the melting temperature and the crystallization temperature of the polyethylene resin formed in the first reactor is within the above range, the stretchable temperature range of the final film may be widened.

The high load melt index (HLMI) (21.6 kg load, 190°C) of the polyethylene resin formed in the first reactor may be 0.1 to less than 10, and may be, for example, 1.0 to 8.0. When the melt index of the polyethylene resin formed in the first reactor is within the above range, the mechanical strength of the finally formed polyethylene resin may be improved.

The zero shear viscosity ($\eta0_{2nd}$) by an ARES rheometer at 180°C of the polyethylene resin formed in the second reactor may be $9.0\times10^4$ poise to $7.0\times10^5$ and may be, for example, $9.0\times10^4$ poise to $5.0\times10^5$ poise. When the polyethylene resin formed in the second reactor has a zero shear viscosity within the above range, the mechanical strength of the finally formed polyethylene resin may be improved.

The number of short chain branches ($SCB_{2nd}$) per 1000 carbons by $^{13}$C-NMR of the polyethylene resin formed in the second reactor may be 1.0 to 5.0, and may be, for example, 2,0 to 4.0. When the polyethylene resin formed in the second reactor has the number of short chain branches within the above range, in the process of successively biaxially stretching the final film using the tenter frame process, the elongation in the longitudinal direction and the transverse direction may be increased, and the final film with high mechanical strength may be obtained.

When forming the polyethylene resin in the second reactor, a comonomer may be supplied and polymerized theretogether. The comonomer may be 1-butene, 1-hexene, 1-octene, or the like, but is not limited thereto. The comonomer may be supplied to the second reactor at a g/kg supply ratio of 0 to 30 relative to $C_2$, and may be supplied, for example, at a g/kg supply ratio of 0 to 20, or 1 to 20. When the comonomer is supplied to the second reactor at a supply ratio within the above range, there is no risk of reactor plugging and fouling forming, and in the process of biaxially stretching the final film, the elongation in the longitudinal direction and the transverse direction may be increased, and the final film with high mechanical strength may be obtained.

In addition, when forming the polyethylene resin in the second reactor, $H_2$ may be supplied and polymerized theretogether. The $H_2$ may be supplied to the second reactor at a mol%/wt% supply ratio of 0.4 to 0.7 relative to $C_2$, and may be supplied, for example, at a mol%/wt% supply ratio of 0.45 to 0.65. When the $H_2$ is supplied to the second reactor at a supply ratio within the above range, there is no risk of reactor plugging and fouling forming, and in the process of biaxially stretching the final film, the elongation in the longitudinal direction and the transverse direction may be increased, and the final film with high mechanical strength may be obtained.

The melt index (5 kg load, 190°C) of the polyethylene resin formed in the second reactor may be 2 to 10, and may be, for example, 2.5 to 8.5. When the melt index of the polyethylene resin formed in the second reactor is within the above range, stable film extrusion processability may be ensured, and the mechanical physical properties of the final film may be improved.

The ratio of zero shear viscosity ($\eta 0_{1st}/\eta 0_{2nd}$) by an ARES rheometer at 180°C of the polyethylene resin formed in the first reactor and the polyethylene resin formed in the second reactor may be 10 to 100, and may be, for example, 10 to 30. When the ratio of zero shear viscosity of the polyethylene resin formed in the first reactor and the polyethylene resin formed in the second reactor is within the above range, the modulus of the final film may be increased, and the transparency of the film may be improved since the surface roughness caused by pressure load when extruding the film is reduced.

In addition, the ratio ($SCB_{1st} / SCB_{2nd}$) of the number of short chain branches per 1000 carbons by $^{13}$C-NMR of the polyethylene resin formed in the first reactor and the polyethylene resin formed in the second reactor may be 2 to 20, and may be, for example, 2 to 10. When the ratio of the number of short chain branches of the polyethylene resin formed in the first reactor and the polyethylene resin formed in the second reactor is within the above range, in the process of biaxially stretching the final film, the elongation in the longitudinal direction and the transverse direction may be increased, and excellent mechanical strength may be ensured.

In addition, the density difference ($D_{2nd} - D_{1st}$) of the polyethylene resin formed in the first reactor and the polyethylene resin formed in the second reactor may be 0.01 g/cm$^3$ to 0.05 g/cm$^3$, and may be, for example, 0.015 g/cm$^3$ to 0.03 g/cm$^3$. When the density difference of the polyethylene resin formed in the first reactor and the polyethylene resin formed in the second reactor is within the above range, in the process of biaxially stretching the final film, the elongation in the longitudinal direction and the transverse direction may be increased, and excellent mechanical strength may be ensured.

The weight ratio of the polyethylene resin formed in the first reactor and the polyethylene resin formed in the second reactor may be 45 to 55 : 55 to 45, and may be, for example, 47 to 52 : 53 to 48. When the weight ratio of the polyethylene resin formed in the first reactor and the polyethylene resin formed in the second reactor is within the above range, production efficiency may be increased, the elongation in the longitudinal direction and the transverse direction may be increased in the process of biaxially stretching the final film, and film tearing may be prevented.

A polyethylene resin composition, which includes a final polyethylene resin formed by the above method, that is, the polyethylene resin formed with zero shear viscosity ($\eta 0_{1st}$), number of short chain branches ($SCB_{1st}$), zero shear viscosity ratio ($\eta 0_{1st}/\eta 0_{2nd}$), ratio of number of short chain branches ($SCB_{1st} / SCB_{2nd}$) and density difference ($D_{2nd} - D_{1st}$) in respective predetermined ranges, is capable of being successively biaxially stretched with an elongation in a longitudinal direction (MD) of up to 6 times and an elongation in a transverse direction (TD) of up to 10 times by a tenter frame process, has excellent processability during stretching, and has a wide stretchable temperature range, and thus, may have excellent stretch properties.

The density of a polyethylene resin composition according to an embodiment may be 0.945 g/cm$^3$ to 0.970 g/cm$^3$, and may be, for example, 0.945 g/cm$^3$ to 0.965 g/cm$^3$. When the density of the polyethylene resin composition is within the above range, the thermal stability of the final film may be excellent, the modulus may be increased, and the transparency may be improved.

The melt index of the polyethylene resin composition may be 0.40 g/10 min to 3.0 g/10 min under a 2.16 kg load condition at 190°C, and may be, for example, 0.49 g/10 min to 2.3 g/10 min. In addition, the melt index of the polyethylene resin composition may be 2.0 g/10 min to 10 g/10 min under a 5 kg load condition at 190°C, and may be, for example, 2.5 g/10 min to 8.5 g/10 min. When the melt index of the polyethylene resin composition is within the above range, extrusion processability may be excellent, and degradation of physical properties due to small molecules may be prevented.

The polyethylene resin composition according to an embodiment of the present invention may further include, in addition to the polyethylene resin, an additive including an antioxidant, a neutralizing agent, or a combination thereof.

The additive may be included in an amount of 0.005 parts by weight to 0.5 parts by weight based on 100 parts by weight of the polyethylene resin composition.

The antioxidant may include a phenolic compound, a phosphorus-based compound, or a combination thereof. The phenolic compound may be pentaerythritol tetrakis(3-(3,5-di-tert-butyl-4-hydroxyphenyl) propionate), octadecyl(3 -(3,5-di-tert-butyl-4-hydroxyphenyl)propionate), tris(3,4-di-tert-butyl-4-hydroxylbenzyl) isocyanate, triethylene glycol-bis(3-(tert-butyl-4-hydroxy-5-methylphenyl)propionate), and the like, and the phosphorus-based compound may be tris(2,4-di-tert-butylphenyl)phosphite, tetrakis(2,4-ditertiarybutylphenyl)-4, 4-diphenyl diphosphonite, distearyl pentaerythritol diphosphite, 2,4-dinonylphenyl di(4-monononylphenyl)phosphite, and the like.

The antioxidant may be included in an amount of 0.01 parts by weight to 0.5 parts by weight, for example, 0.1 parts by weight to 0.3 parts by weight, based on 100 parts by weight of the polyethylene resin composition. When the antioxidant is included within the above content range, excellent processability may be obtained without discoloration or viscosity change.

The neutralizing agent may include a calcium stearate, a zinc stearate, a magnesium aluminum hydroxy carbonate, a zinc oxide, a magnesium hydroxy stearate, or a combination thereof.

The neutralizing agent may be included in an amount of 0.005 parts by weight to 0.3 parts by weight, for example, 0.02 parts by weight to 0.1 parts by weight, based on 100 parts by weight of the polyethylene resin composition.

When the neutralizing agent is included within the above content range, excellent processability may be obtained without discoloration or viscosity change.

Hereinafter, a method for manufacturing the above-described polyethylene resin composition according to another embodiment will be described.

The method for manufacturing the above-described polyethylene resin composition includes preparing a polyethylene resin using a first reactor and a second reactor, successively.

Specifically, a polyethylene resin with a relatively high molecular weight and low density may be prepared by polymerization in the first reactor, and then the polyethylene resin may be transported to the second reactor and polymerized to prepare a polyethylene resin with a relatively low molecular weight and high density.

The polymerization in the first reactor and in the second reactor may be performed under a Ziegler-Natta catalyst. The Ziegler-Natta catalyst is a catalyst commonly known as a Ziegler-Natta catalyst and uses a transition metal compound which belongs to Group IV, Group V or VI of the Periodic Table of the Elements as a main catalyst. The most used Ziegler-Natta catalyst is a halogenated complex composed of magnesium and titanium, or magnesium and vanadium.

In addition, during the polymerization in the first reactor and in the second reactor, a comonomer may be introduced thereto. The comonomer may be C3 to C20, for example, C4 to C8, or C6 to C8 $\alpha$-olefin.

The polymerization in the first reactor may be performed under the conditions of a pressure of 40 MPa to 50 MPa, a temperature of 70°C to 100°C, and a residence time of 40 minutes to 70 minutes, and may be performed, for example, a pressure of 42 MPa to 48 MPa, a temperature of 80°C to 95°C, and a residence time of 50 minutes to 65 minutes.

In addition, the polymerization in the second reactor may be performed under the conditions of a pressure of 40 MPa to 50 MPa, a temperature of 80°C to 110°C, and a residence time of 20 minutes to 50 minutes, and may be performed, for example, a pressure of 42 MPa to 48 MPa, a temperature of 90°C to 100°C, and a residence time of 25 minutes to 40 minutes.

Descriptions of the density ($D_{1st}$), zero shear viscosity ($\eta 0_{1st}$), number of short chain branches ($SCB_{1st}$), supply ratio of a comonomer relative to $C_2$, supply ratio of $H_2$ relative to $C_2$, melting temperature (Tm), difference (Tm-Tc) between the melting temperature (Tm) and the crystallization temperature (Tc), high load melt index, and the like of the polyethylene resin formed in the first reactor are the same as described above, and descriptions of the density ($D_{2nd}$), zero shear viscosity ($\eta 0_{2nd}$), number of short chain branches ($SCB_{2nd}$), supply ratio of a comonomer relative to $C_2$, supply ratio of $H_2$ relative to $C_2$, melt index, and the like of the polyethylene resin formed in the second reactor are the same as those described above. In addition, the ratio of zero shear viscosity ($\eta 0_{1st}/\eta 0_{2nd}$), ratio of number of short chain branches ($SCB_{1st} / SCB_{2nd}$), density difference ($D_{2nd} - D_{1st}$), weight ratio, and the like of the polyethylene resin formed in the first reactor and the polyethylene resin formed in the second reactor are also the same as those described above.

According to another embodiment of the present invention, there is provided a molded article manufactured from the above-described polyethylene resin.

The molded article may be a film successively biaxially stretched to a longitudinal direction (MD) elongation of 4 to 6 times and a transverse direction (TD) elongation of 8 to 10 times by a tenter-frame process.

Hereinafter, specific embodiments of the present invention will be presented. However, the embodiments described below are only for specifically illustrating or describing the present invention, and the present invention should not be limited thereby. In addition, contents not described herein can be sufficiently technically inferred by those skilled in the art, and thus, the description thereof will be omitted.

**<Manufacturing polyethylene resin composition>**

**Example 1**

Two reactors (the capacity of each reactor is 90 liters) were connected in series to perform ethylene polymerization using a Ziegler-Natta catalyst and a comonomer. As a known catalyst composed of magnesium and titanium, the Ziegler-Natta catalyst prepared by a typical method was used.

Specifically, a polymer of a slurry phase polymerized in a first reactor was transported to a second reactor to be continuously subjected to polymerization, and the ratio of polymerization amount of each reactor was set to a weight ratio of 51: 49. At this time, in the first reactor, 1-hexene was supplied as a comonomer at a 90 g/kg supply ratio relative to $C_2$, and $H_2$ was supplied at a 31 mg/kg supply ratio relative to $C_2$. In addition, during the polymerization of the polyethylene resin in the second reactor, 1-hexene was supplied as a comonomer at a 10 g/kg supply ratio relative to $C_2$, and $H_2$ was supplied at a 0.52 mol%/wt% supply ratio relative to $C_2$. The polymerization in the first reactor was performed under the conditions of a temperature of 80°C, a pressure of 45 kgf/cm$^2$, and a residence time of 61 minutes, and the polymerization in the second reactor was performed under the conditions of a temperature of 94°C, a pressure of 45 kgf/cm$^2$, and a residence time of 34 minutes. The process conditions in each of the first reactor and the second reactor and the physical properties of each formed polyethylene resin are shown in Table 1 below.

With 100 parts by weight of the obtained powder-type polyethylene resin, 0.1 parts by weight of Irganox-1076 and 0.1 parts by weight of Irgafos-168 as antioxidants, and 0.025 parts by weight of magnesium aluminum hydroxy carbonate (DHT-4A) as a neutralizing agent were mixed with a Henschel mixer, and then using a twin-screw extruder, a polyethylene resin composition in a pellet form was prepared.

### Example 2

A polyethylene resin composition was prepared in the same manner as in Example 1 according to the composition of Table 1 below.

A polymer of a slurry phase polymerized in a first reactor was transported to a second reactor to be continuously subjected to polymerization, and the ratio of polymerization amount in each reactor was set to a weight ratio of 47: 53. At this time, in the first reactor, 1-hexene was supplied as a comonomer at a 68 g/kg supply ratio relative to $C_2$, and $H_2$ was supplied at a 38 mg/kg supply ratio relative to $C_2$, and during the polymerization of the polyethylene resin in the second reactor, a comonomer was not supplied.

### Example 3

A polyethylene resin composition was prepared in the same manner as in Example 1 according to the composition of Table 1 below.

A polymer of a slurry phase polymerized in a first reactor was transported to a second reactor to be continuously subjected to polymerization, and the ratio of polymerization amount in each reactor was set to a weight ratio of 49: 51. At this time, in the first reactor, 1-hexene was supplied as a comonomer at a 40 g/kg supply ratio relative to $C_2$, and $H_2$ was supplied at a 55 mg/kg supply ratio relative to $C_2$, and during the polymerization of the polyethylene resin in the second reactor, a comonomer was not supplied.

### Comparative Example 1

A polyethylene resin composition was prepared in the same manner as in Example 1 according to the composition of Table 1 below.

A polymer of a slurry phase polymerized in a first reactor was transported to a second reactor to be continuously subjected to polymerization, and the ratio of polymerization amount in each reactor was set to a weight ratio of 50: 50. At this time, in the first reactor, 1-hexene was supplied as a comonomer at a 17 g/kg supply ratio relative to $C_2$, and $H_2$ was supplied at a 210 mg/kg supply ratio relative to $C_2$, and during the polymerization of the polyethylene resin in the second reactor, 1-hexene was supplied as a comonomer at a 33 g/kg supply ratio relative to $C_2$.

### Comparative Example 2

A polyethylene resin composition was prepared in the same manner as in Example 1 according to the composition of Table 1 below.

A polymer of a slurry phase polymerized in a first reactor was transported to a second reactor to be continuously subjected to polymerization, and the ratio of polymerization amount in each reactor was set to a weight ratio of 50: 50. At this time, in the first reactor, 1-hexene was supplied as a comonomer at a 90 g/kg supply ratio relative to $C_2$, and $H_2$ was supplied at a 120 mg/kg supply ratio relative to $C_2$, and during the polymerization of the polyethylene resin in the second reactor, a comonomer was not supplied.

### Comparative Example 3

A polyethylene resin composition was prepared in the same manner as in Example 1 according to the composition of Table 1 below.

A polymer of a slurry phase polymerized in a first reactor was transported to a second reactor to be continuously subjected to polymerization, and the ratio of polymerization amount in each reactor was set to a weight ratio of 50: 50. At this time, in the first reactor, 1-hexene was supplied as a comonomer at a 13 g/kg supply ratio relative to $C_2$, and $H_2$ was supplied at a 48 mg/kg supply ratio relative to $C_2$, and during the polymerization of the polyethylene resin in the second reactor, a comonomer was not supplied.

**Evaluation 1: Measurement of physical properties of polyethylene resin composition**

The physical properties of the polyethylene resin composition manufactured in each of Examples 1 to 3 and Comparative Examples 1 to 3 were measured, and the results are shown in Table 1 below.

Melt index (MI)

Measurements were made in accordance with ASTM D1238 at 190°C with loads of 2.16 kg, 5 kg, and 21.6 kg, respectively.

The melt index measured at the 2.16 kg load was denoted as $MI_2$, the melt index measured at the 5 kg load was denoted as $MI_5$, and the melt index measured at the 21.6 kg load was denoted as HLMI.

Density

Measurements were made in accordance with ASTM D1505.

Zero shear viscosity

Using an advanced rheometer expansion system (ARES) rheometer, measurements were made under the conditions of frequency sweep 180°C, strain 5%, 0.01 to 400 rad/s, and then the zero shear viscosity was calculated using the Carreau model.

Number of short chain branches per 1000 carbons (SCB)

Using quantitative nuclear magnetic resonance (NMR) spectroscopy, the number of short chain branches per 1000 carbons of the polyethylene resin was calculated. A Bruker 600 MHz NMR spectrometer was used, and a 10 mm multinuclear high-temperature CryoProbe optimized for $^{13}$C-NMR was used. About 2 g of a sample was prepared by being dissolved at 150°C in 2.8 m$\ell$ of a mixed solvent in which 1,2-dichlorobenzene and benzene-d6 was mixed at 4:1, and measurements were made under the experimental conditions of number of scan 5000, D1 12 seconds, pulse width 90°, measurement temperature 130°C, and proton-decoupling mode.

The quantitative calculation of a $^{13}$C-NMR spectrum was performed by calculating the mol% content of the polyethylene resin using an integral ratio of characteristic signals (38.2 ppm, 34.6 ppm, and 34.2 ppm) of a specific comonomer, a 1-hexene monomer, where the chemical shift of a bulk methylene ($-(CH_2)_n-$) is not affected by other comonomer sequences at 30 ppm.

Using this, the number of short chain branches (SCB) per 1000 carbons was calculated by Equations 1 to 4 below.

[Equation 1]

$$\text{Number of moles of hexene-1 (H') = (H1 + H2) / 2}$$

(In Equation 1 above,

H1 is A, wherein A is an integral value of 38.1 ppm, and
H2 is (B + C)/3, wherein B is an integral value of 34.6 ppm, and C is an integral value of 34.2 ppm.)

[Equation 2]

$$\text{Number of moles of ethylene (E') = [\{(D + E) - E\} / 2] + H'}$$

(In Equation 2 above,
D + E is an integral value of 33.9 ppm to 27.3 ppm, wherein E is an integral value of 27.3 ppm.)

[Equation 3]

$$\text{Mol\% of hexene-1} = H'/(H' + E') \times 100$$

[Equation 4]

$$\text{Number of short chain branches per 1000 carbons (SCB)} = H'/(E' \times 2 + H' \times 6) \times 1000$$

Melting temperature and crystallization temperature

Measurements were made using a differential scanning calorimeter (DSC), and in accordance with ASTM D 3418 at a temperature increase rate of 10 °C/min.

[Table 1]

| | | Example 1 | Example 2 | Example 3 | Comparative Example 1 | Comparative Example 2 | Comparative Example 3 |
|---|---|---|---|---|---|---|---|
| First reactor | (g/kg) supply ratio of 1-hexene relative to $C_2$ | 90 | 68 | 40 | 17 | 90 | 13 |
| | (mg/kg) supply ratio of $H_2$ relative to $C_2$ | 31 | 38 | 55 | 210 | 120 | 48 |
| | Polymerization ratio (Weight ratio) | 51 | 47 | 49 | 50 | 50 | 50 |
| | Density (g/cm$^3$) | 0.926 | 0.932 | 0.935 | 0.952 | 0.932 | 0.946 |
| | Number of short chain branches ($SCB_{1st}$) | 13 | 6.8 | 5.02 | 1.1 | 5.9 | 2.2 |
| | HLMI (g/10 min) | 1.8 | 2.9 | 5.0 | 143.0 | 74.0 | 3.0 |
| | Zero shear viscosity ($\eta 0_{1st}$) | 5.44.E+06 | 3.25.E+06 | 1.47.E+06 | 5.95.E+04 | 2.71.E+05 | 4.87.E+0 6 |
| | Tm (°C) | 123 | 125 | 126 | 129 | 124 | 128 |
| | Tc (°C) | 112 | 115 | 116 | 120 | 114 | 119 |
| Second reactor | (g/kg) supply ratio of 1-hexene to $C_2$ | 10 | 0 | 0 | 33 | 0 | 0 |
| | (mol%/wt%) supply ratio of $H_2$ to $C_2$ | 0.52 | 0.6 | 0.5 | 0.14 | 0.12 | 0.3 |
| | Polymerization ratio (Weight ratio) | 49 | 53 | 51 | 50 | 50 | 50 |
| | Density (g/cm$^3$) | 0.948 | 0.952 | 0.952 | 0.953 | 0.952 | 0.952 |
| | Number of short chain branches ($SCB_{2nd}$) | 4 | 2.3 | 2.1 | 1.5 | 2.0 | 1.7 |
| | $MI_5$ (g/10 min) | 2.6 | 5.9 | 8.5 | 12.7 | 4.8 | 2.8 |
| | Zero shear viscosity ($\eta 0_{2nd}$) | 4.0.E+05 | 2.1.E+05 | 9.4.E+04 | 5.2.E+04 | 2.7.E+05 | 3.9.E+05 |
| First and second reactors | Ratio of zero shear viscosity ($\eta 0_{1st}/\eta 0_{2nd}$) | 13.6 | 15.8 | 15.5 | 1.1 | 1.0 | 12.4 |
| | Ratio of number of short chain branches ($SCB_{1st}/SCB_{2nd}$) | 3.3 | 3.0 | 2.4 | 0.7 | 3.0 | 1.3 |
| | Density difference ($D_{2nd} - D_{1st}$) | 0.022 | 0.020 | 0.017 | 0.001 | 0.020 | 0.006 |

(continued)

| | | Example 1 | Example 2 | Example 3 | Comparative Example 1 | Comparative Example 2 | Comparative Example 3 |
|---|---|---|---|---|---|---|---|
| Polyeth ylene resin compos ition | Density (g/cm$^3$) | 0.948 | 0.952 | 0.952 | 0.953 | 0.952 | 0.952 |
| | MI$_2$ (g/10 min) | 0.49 | 1.04 | 2.2 | 4 | 1.3 | 0.6 |
| | MI$_5$ (g/10 min) | 2.5 | 5.8 | 8.5 | 12.0 | 4.7 | 2.6 |
| | Ratio of melt flow rate (MFRR$_{5/2.16}$) | 5.1 | 5.6 | 3.9 | 3.0 | 3.6 | 4.3 |
| | Tm (°C) | 128 | 130 | 129 | 130 | 130 | 130 |
| | Tc (°C) | 116 | 118 | 118 | 121 | 120 | 120 |

### Evaluation 2: Evaluation of biaxial stretch properties

In order to evaluate the biaxial stretch properties using the polyethylene resin composition manufactured in each of Examples 1 to 3 and Comparative Examples 1 to 3, a sheet for a film of a width of 300 mm and a thickness of 800 μm was prepared at a temperature of 220°C in a PE30-CR9 casting molding machine by OCS. A square specimen of a size of 80 mm × 80 mm was cut from the middle part of the extruded sheet, and using a Bruckner Karo V biaxial stretcher, biaxial stretching was performed at a stretching rate of 100 %/s based on the original specimen. The warm-up time before the stretching was fixed at 120 seconds, and the stretching was performed simultaneously or sequentially in two directions. In the simultaneous biaxial stretching, the specimen was stretched in both directions with an 8 × 8 stretch ratio. In the successive biaxial stretching, the specimen was primarily stretched in the longitudinal direction (MD) up to 6 times, and secondarily stretched in the transverse direction (TD) up to 9 times.

This is shown in Table 2 below, and the case where stretching was possible is denoted as O, and the case where stretching was not possible is denoted as X.

[Table 2]

| | Example 1 | Example 2 | Example 3 | Comparative Example 1 | Comparative Example 2 | Comparative Example 3 |
|---|---|---|---|---|---|---|
| Stretch ratio | 6X9 | 6X9 | 6X9 | 3X3 | 4X4 | 4X3 |
| | Successive stretching | Successive stretching | Successive stretching | Successive stretch | Successive stretch | Successive stretch |
| 115°C | X (Torn) | X (Torn) | X (Torn) | X | X | X |
| 118°C | O | X | X | X | X | X |
| 119°C | O | X | O | X | X | X |
| 120°C | O | O | O | X | O | O |
| 123°C | O | O | O | X | O | X |
| 124°C | X (Melted) | O | O | X | X | X |
| 125°C | X | O | X (Melted) | X | X | X |
| 126°C | X | X (Melted) | X | X | X | X |

Through Table 2 above, it was confirmed that, when the polyethylene resin composition of each of Examples 1 to 3 according to an embodiment was used, successive stretching was easily achieved up to 6 times in the longitudinal direction and up to 9 times in the transverse direction. It was also confirmed that stretch processing was possible in a wide temperature range with a stretchable temperature range of between 118°C and 125°C.

### Evaluation 3: Measurement of physical properties of sheet for biaxially stretched film

The physical properties of the film sheet according to each of Examples 1 to 3 prepared above were measured in the following manner, and the results are shown in Table 3 below.

Haze

Measurements were made in accordance with ASTM D 1003.

Gloss

Measurements were made in accordance with ASTM D 2457.

Dart impact strength

Measurements were made in accordance with ASTM D 1709.

Puncture test

Measurements were made in accordance with ASTM D 5748.

Tensile strength, elongation, and modulus

Measurements were all made in accordance with ASTM D 882.

[Table 3]

|  | Example 1 | Example 2 | Example 3 |
|---|---|---|---|
| Stretch ratio | 6X9 | 6X9 | 6X9 |
| Thickness of sheet ($\mu$m) | 800 | 800 | 800 |
| Average thickness ($\mu$m) | 15 | 15 | 15 |
| Haze (%) | 4.3 | 6.1 | 6.6 |
| Gloss(45°) (%) | 79 | 69 | 72 |
| Drop impact strength (g) | 520 | 430 | 390 |
| Puncture_Load (N) | 36 | 35 | 35 |
| Puncture_Energy (kgf-mm) | 206 | 177 | 182 |
| 1% Secant MD modulus(kg/cm$^2$) | 11112 | 11575 | 13031 |
| 1% Secant TD modulus(kg/cm$^2$) | 14398 | 17698 | 17135 |
| MD Tensile strength (kg/cm$^2$) | 906 | 1008 | 1055 |
| MD elongation (%) | 121 | 121 | 108 |
| TD Tensile strength (kg/cm$^2$) | 1597 | 1831 | 1733 |
| TD elongation (%) | 39 | 33 | 35 |

Through Table 3 above, it can be confirmed that in the case of a film sequentially biaxially stretched 6 times in the longitudinal direction and 9 times in the transverse direction using the polyethylene resin composition of each of Examples 1 to 3 according to an embodiment, the transparency is excellent, and the mechanical strength such as the impact strength, modulus, and tensile strength is also excellent.

Although preferred embodiments of the present invention have been described above, the present invention is not limited thereto, and it is possible to perform various modifications within the scope of the claims, the detailed description of the invention, and the accompanying drawings. It is obvious that the modifications also fall within the scope of the present invention.

**Claims**

1. A polyethylene resin composition comprising a polyethylene resin formed using a first reactor and a second reactor successively,

   wherein the zero shear viscosity ($\eta0_{1st}$) by an ARES rheometer at 180°C of a polyethylene resin formed in the first reactor is $10^6$ poise to $10^8$ poise, and the number of short chain branches ($SCB_{1st}$) per 1000 carbons by $^{13}$C-NMR is 5 to 20, and
   the ratio of zero shear viscosity ($\eta0_{1st}/\eta0_{2nd}$) by an ARES rheometer at 180°C of the polyethylene resin formed in the first reactor and a polyethylene resin formed in the second reactor is 10 to 100, the ratio of the number of short chain branches ($SCB_{1st}$ / $SCB_{2nd}$) per 1000 carbons by $^{13}$C-NMR is 2 to 20, and the density difference ($D_{2nd}$ - $D_{1st}$) is 0.01 g/cm$^3$ to 0.05 g/cm$^3$.

2. The polyethylene resin composition of claim 1, wherein the density ($D_{1st}$) of the polyethylene resin formed in the first reactor is 0.915 g/cm$^3$ to 0.935 g/cm$^3$, and the density ($D_{2nd}$) of the polyethylene resin formed in the second reactor is 0.945 g/cm$^3$ to 0.965 g/cm$^3$.

3. The polyethylene resin composition of claim 1, wherein when forming the polyethylene resin in the first reactor, a comonomer is supplied at a g/kg supply ratio of 10 to 150 relative to C$_2$.

4. The polyethylene resin composition of claim 1, wherein when forming the polyethylene resin in the first reactor, H$_2$ is supplied at a mg/kg supply ratio of 10 to 100 relative to C$_2$.

5. The polyethylene resin composition of claim 1, wherein the melting temperature (Tm) of the polyethylene resin formed in the first reactor is 110°C to 126°C, and the difference (Tm-Tc) between the melting temperature (Tm) and the crystallization temperature (Tc) is 10°C to 15°C.

6. The polyethylene resin composition of claim 1, wherein when forming the polyethylene resin in the second reactor, H$_2$ is supplied at a mol%/wt% supply ratio of 0.4 to 0.7 relative to C$_2$.

7. The polyethylene resin composition of claim 1, wherein the zero shear viscosity ($\eta 0_{2nd}$) by an ARES rheometer at 180°C of the polyethylene resin formed in the second reactor is $9.0 \times 10^4$ poise to $7.0 \times 10^5$ poise.

8. The polyethylene resin composition of claim 1, wherein the number of short chain branches (SCB$_{2nd}$) per 1000 carbons by $^{13}$C-NMR of the polyethylene resin formed in the second reactor is 1.0 to 5.0.

9. The polyethylene resin composition of claim 1, wherein the weight ratio of the polyethylene resin formed in the first reactor and the polyethylene resin formed in the second reactor is 45 to 55 : 55 to 45.

10. The polyethylene resin composition of claim 1, wherein the density of the polyethylene resin composition is 0.945 g/cm$^3$ to 0.970 g/cm$^3$.

11. The polyethylene resin composition of claim 1, wherein the melt index of the polyethylene resin composition is 0.4 g/10 min to 3.0 g/10 min under a 2.16 kg load condition at 190°C, and is 2.0 g/10 min to 10 g/10 min at a 5 kg load condition at 190°C.

12. A method for manufacturing a polyethylene resin composition, the method comprising preparing a polyethylene resin using a first reactor and a second reactor successively,

wherein the zero shear viscosity ($\eta 0_{1st}$) by an ARES rheometer at 180°C of a polyethylene resin formed in the first reactor is $10^6$ poise to $10^8$ poise, and the number of short chain branches (SCB$_{1st}$) per 1000 carbons by $^{13}$C-NMR is 5.0 to 20, and
the ratio ($\eta 0_{1st}/\eta 0_{2nd}$) of zero shear viscosity by an ARES rheometer at 180°C of the polyethylene resin formed in the first reactor and a polyethylene resin formed in the second reactor is 10 to 100, the ratio (SCB$_{1st}$ / SCB$_{2nd}$) of the number of short chain branches per 1000 carbons by $^{13}$C-NMR is 2 to 20, and the density difference (D$_{2nd}$ - D$_{1st}$) is 0.01 g/cm$^3$ to 0.05 g/cm$^3$.

13. A molded article comprising a polyethylene resin composition according to any one of claims 1 to 11.

14. The molded article of claim 13, wherein the molded article is a film successively biaxially stretched to a longitudinal direction (MD) elongation of 4 to 6 times and a transverse
direction (TD) elongation of 8 to 10 times by a tenter-frame process.

Europäisches
Patentamt

European
Patent Office

Office européen
des brevets

# EUROPEAN SEARCH REPORT

**Application Number**

EP 22 21 2605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 223 961 A1 (DOW GLOBAL TECHNOLOGIES INC [US]) 1 September 2010 (2010-09-01) * paragraph [0134]; claim 1; tables 2A, 2D, 2E * | 1-14 | INV. C08F210/16 C08J5/18 B32B27/32 |
| X | WO 2021/074785 A1 (NOVA CHEM INT SA [CH]) 22 April 2021 (2021-04-22) * page 3233, paragraph bridge; claim 1; examples IE3, IE5; tables 1-3 * | 1-6,8-14 | |
| X | CA 3 102 574 A1 (NOVA CHEMICALS CORP [CA]) 29 December 2021 (2021-12-29) * page 1, lines 21-25; claims 11, 12; figures 6, 7; examples IE1, IE2; tables 2, 3 * | 1-14 | |

**TECHNICAL FIELDS SEARCHED (IPC)**

C08F
C08L
B32B

The present search report has been drawn up for all claims

| Place of search | Date of completion of the search | Examiner |
|---|---|---|
| Munich | 22 May 2023 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 2605

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2023

| Patent document cited in search report | | Publication date | Patent family member(s) | | Publication date |
|---|---|---|---|---|---|
| EP 2223961 | A1 | 01-09-2010 | AR | 063503 A1 | 28-01-2009 |
| | | | AT | 469940 T | 15-06-2010 |
| | | | AT | 535568 T | 15-12-2011 |
| | | | BR | PI0716335 A2 | 11-03-2014 |
| | | | CA | 2667459 A1 | 02-05-2008 |
| | | | CL | 2007003034 A1 | 20-06-2008 |
| | | | CN | 101568586 A | 28-10-2009 |
| | | | CO | 6190557 A2 | 19-08-2010 |
| | | | EP | 2076565 A2 | 08-07-2009 |
| | | | EP | 2223961 A1 | 01-09-2010 |
| | | | EP | 2267070 A1 | 29-12-2010 |
| | | | ES | 2343092 T3 | 22-07-2010 |
| | | | ES | 2389876 T3 | 02-11-2012 |
| | | | PL | 2076565 T3 | 30-11-2010 |
| | | | PL | 2267070 T3 | 30-11-2012 |
| | | | RU | 2009119449 A | 27-11-2010 |
| | | | US | 2010003439 A1 | 07-01-2010 |
| | | | US | 2013137828 A1 | 30-05-2013 |
| | | | WO | 2008051824 A2 | 02-05-2008 |
| WO 2021074785 | A1 | 22-04-2021 | BR | 112022007224 A2 | 05-07-2022 |
| | | | CA | 3152079 A1 | 22-04-2021 |
| | | | EP | 4045589 A1 | 24-08-2022 |
| | | | WO | 2021074785 A1 | 22-04-2021 |
| CA 3102574 | A1 | 29-12-2021 | BR | 112022026435 A2 | 17-01-2023 |
| | | | CA | 3102574 A1 | 29-12-2021 |
| | | | CN | 115715303 A | 24-02-2023 |
| | | | EP | 4172219 A2 | 03-05-2023 |
| | | | KR | 20230017859 A | 06-02-2023 |
| | | | WO | 2022003499 A2 | 06-01-2022 |

EPO FORM P0459

For more details about this annex : see Official Journal of the European Patent Office, No. 12/82